(19) Europäisches Patentamt
European Patent Office
Office européen des brevets

(11) Veröffentlichungsnummer: **0 201 764**
**B1**

# (12) EUROPÄISCHE PATENTSCHRIFT

(45) Veröffentlichungstag der Patentschrift: **25.01.89**

(51) Int. Cl.⁴: **C07F 9/09**, C07F 9/165, C07F 9/24, C07F 9/40, A01N 57/02

(21) Anmeldenummer: **86105521.8**

(22) Anmeldetag: **22.04.86**

(54) **Oximinophosphorsäurederivate, Verfahren zu ihrer Herstellung und ihre Verwendung zur Bekämpfung von Schädlingen.**

(30) Priorität: **25.04.85 DE 3514922**
**15.05.85 DE 3517478**
**09.08.85 DE 3528599**

(43) Veröffentlichungstag der Anmeldung: **20.11.86 Patentblatt 86/47**

(45) Bekanntmachung des Hinweises auf die Patenterteilung: **25.01.89 Patentblatt 89/4**

(84) Benannte Vertragsstaaten: **AT BE CH DE FR GB LI NL**

(56) Entgegenhaltungen:
**EP-A- 0 074 047**
**FR-A- 2 209 767**

(73) Patentinhaber: **BASF Aktiengesellschaft, Carl-Bosch-Strasse 38, D-6700 Ludwigshafen(DE)**

(72) Erfinder: **Buerstinghaus, Rainer, Dr., Roentgenstrasse 38, D-6900 Heidelberg(DE)**
Erfinder: **Merger, Franz, Dr., Max-Slevogt-Strasse 25, D-6710 Frankenthal(DE)**
Erfinder: **Kropp, Rudolf, Sprottauer Strasse 2, D-6703 Limburgerhof(DE)**
Erfinder: **Kiehs, Karl, Dr., Sudetenstrasse 22, D-6840 Lampertheim(DE)**
Erfinder: **Adolphi, Heinrich, Dr., Kalmitweg 11, D-6703 Limburgerhof(DE)**

**EP 0 201 764 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft Oximinophosphorsäurederivate, Verfahren zu ihrer Herstellung, Schädlingsbekämpfungsmittel, die diese Phosphorsäurederivate als Wirkstoffe enthalten, sowie ein Verfahren zur Bekämpfung von Schädlingen mit diesen Wirkstoffen.

Oximinophosphorsäurederivate sind aus der DE-AS 1 052 981, der DE-AS 1 238 902, der DE-OS 2 304 848, der DE-OS 2 952 738 und der DE-OS 3 302 969 bekannt. In der DE-OS 3 135 182 (EP-A 0 074 047) werden u.a. Oximinophosphorsäurederivate der Formel A

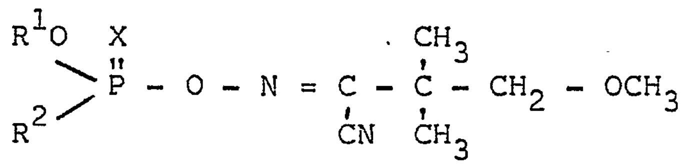 (A)

beschrieben. Die bekannten Oximinophosphorsäurederivate eignen sich zur Bekämpfung von Insekten und Spinnentieren. Ihre Wirkung ist jedoch speziell bei geringer Konzentration nicht immer ganz zufriedenstellend.

Der Erfindung lag daher die Aufgabe zugrunde, Oximinoderivate mit verbesserter Wirkung gegenüber Insekten und Spinnentieren zu finden.

Es wurde gefunden, daß Oximinophosphorsäurederivate der Formel I

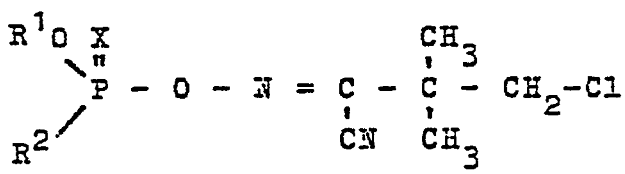 (I),

in der
$R^1$ eine unverzweigte oder verzweigte Alkylgruppe mit bis zu 4 Kohlenstoffatomen,
$R^2$ eine unverzweigte oder verzweigte Alkoxy- oder Alkylthiogruppe mit bis zu 4 Kohlenstoffatomen, eine unverzweigte oder verzweigte Alkylgruppe mit bis zu 3 Kohlenstoffatomen, Phenyl, die Aminogruppe oder einen unverzweigten Alkylamino- oder Dialkylaminorest mit jeweils bis zu 4 Kohlenstoffatomen pro Alkylgruppe, X Sauerstoff oder Schwefel bedeuten,
insektizid, akarizid und nematizid sehr gut wirksam und bekannten Wirkstoffen ähnlicher Struktur bzw. gleicher Wirkungsrichtung überlegen sind.

Gegenüber der in der DE-OS 3 135 182 beschriebenen methoxy-methylsubstituierten Verbindung (A) wurde z.B. im Versuch mit Baumwollwanzen, Moskitolarven oder Stubenfliegen eine bis zu 10 mal höhere Wirkung erzielt. Gegenüber Zecken zeigten die erfindungsgemäßen Verbindungen eine bis zu 50fach höhere Wirkung.

Die Oximinophosphorsäurederivate der Formel I können durch Umsetzung des α-Oximinonitrils (II) mit entsprechenden (Thio) (Thio)Phosphor(Phosphon)säureester(amid)halogeniden (III) erhalten werden:

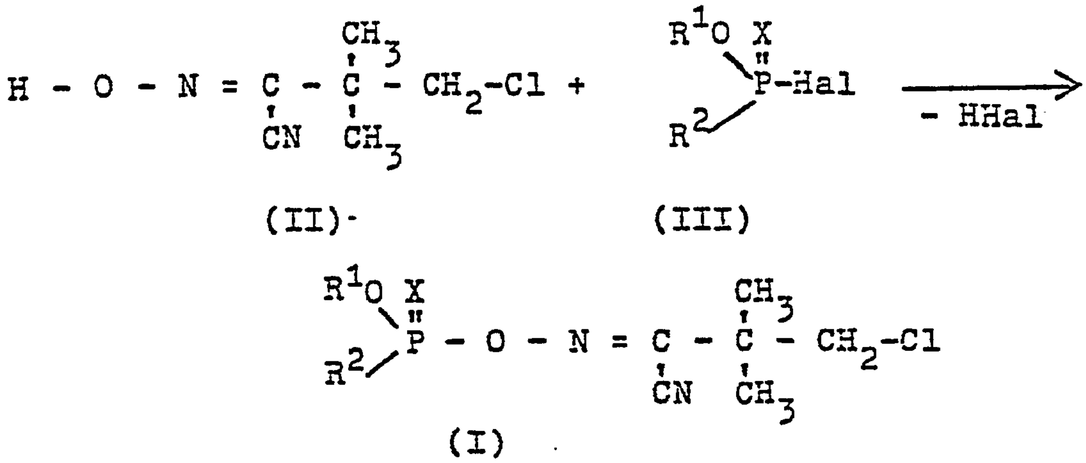

(II) (III)
(I)

Hal(ogen) bedeutet aus wirtschaftlichen Gründen vorzugsweise ein Chloratom.

Die Umsetzung wird zweckmäßigerweise in einem Lösungs- oder Verdünnungsmittel durchgeführt. Hierzu sind beispielsweise geeignet: aliphatische und aromatische, gegebenenfalls chlorierte Kohlenwasserstoffe wie Petrolether, Benzol, Toluol, Xylol, Benzin, Dichlormethan, Chloroform, Tetrachlormethan, 1,2-Dichlorethan, Chlorbenzol wie Diethyl- und Di-n-butylether, Methyl-tert.-butylether, Tetrahydrofuran, Dioxan; Ketone, beispielsweise Aceton, Methylethylketon, Methylisopropylketon; ferner Nitrile wie Acetonitril und Propionitril. Auch Gemische dieser Stoffe können als Lösungs- oder Verdünnungsmittel verwendet werden.

Als Säurebindemittel (Säureacceptoren) eignen sich die bei der Phosphorylierung von Hydroxyverbindungen üblichen basischen Mittel. Besonders geeignet sind Alkalimetallcarbonate oder -alkholate wie Natrium- und Kaliumcarbonat, -methylat und -ethylat, ferner aliphatische, aromatische und heterocyclische Amine, z.B. Triethylamin, Dimethylamin, Piperidin, Dimethylanilin, Dimethylbenzylamin und Pyridin. In einigen Fällen ist die Verwendung von Alkyllithiumverbindungen, z.B. n-Butyllithium oder Alkalimetallhydriden, z.B. Natriumhydrid vorteilhaft.

Anstelle des Zusatzes eines Säureacceptors kann man auch vor der Umsetzung die Salze des $\chi$-Oximinonitrils (II), etwa die Alkalimetall-, Erdalkalimetall- oder Ammoniumsalze herstellen und diese umsetzen.

Üblicherweise setzt man die Ausgangsstoffe in stöchiometrischem Verhältnis ein. Ein Überschuß des einen oder anderen Ausgangsstoffes kann in Einzelfällen aber durchaus vorteilhaft sein.

Die Umsetzung verläuft gewöhnlich oberhalb von Raumtemperatur mit ausreichender Geschwindigkeit. 120°C müssen i.a. nicht überschritten werden. Da die Reaktion in einigen Fällen unter Wärmeentwicklung verläuft, kann es von Vorteil sein, eine Kühlmöglichkeit vorzusehen.

Aus dem Reaktionsgemisch wird der erfindungsgemäße Wirkstoff in üblicher Weise gewonnen, z.B. durch Versetzen mit Wasser, Trennen der Phasen und Destillation und/oder Säulenchromatographie.

Das zur Herstellung von Verbindungen der Formel (I) als Ausgangsmaterial verwendete $\alpha$-Oximinonitril der Formel (II) ist eine neue Verbindung. Sie läßt sich aber in an sich bekannter Weise (DE-AS 1 567 142) durch Chlorieren von 2-Methyl-2(chlormethyl)propionaldoxim (IV) und anschließender Umsetzung mit Natrium- oder Kaliumcyanid gemäß folgender Reaktionsgleichung herstellen:

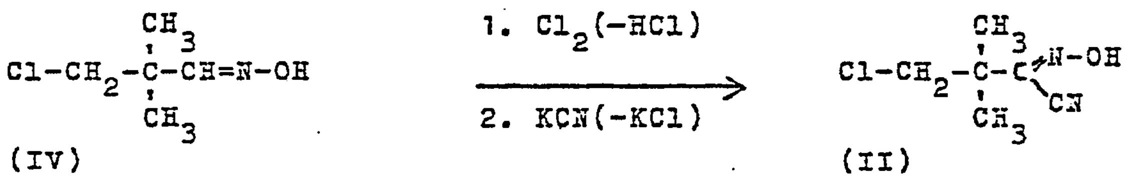


(IV) (II)

Das Oxim der Formel (IV) erhält man durch Umsetzen von Chlorpivalaldehyd (V) mit Hydroxylaminhydrochlorid nach folgender Reaktionsgleichung:

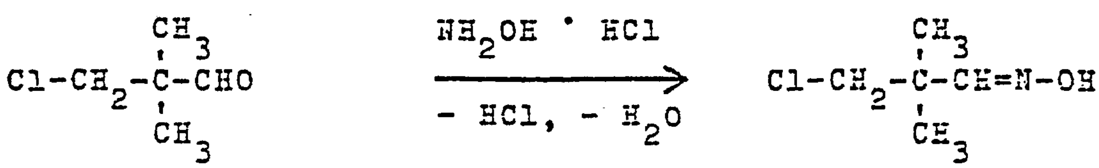


(V) (IV)

Chlorpivalaldehyd ist literaturbekannt (vgl. J. Org. Chem. 43, 1285-1286 (1978); J. Am. Chem. Soc. 105, 5665–5675 (1983)).

Die zur Synthese der Verbindungen der Formel (I) außerdem benötigten (Thio) (Thiol)Phosphor(Phosphon)säureester(amid)halogenide (III) sind aus Houben-Weyl, Methoden der organischen Chemie, Band XII/2. Seite 274 ff. (Stuttgart 1964) bekannt und lassen sich auf den dort beschriebenen Synthesewegen herstellen.

Die neuen Verbindungen der Formel I fallen teilweise in Form farbloser oder schwach bräunlich gefärbter Öle an, die sich durch längeres Erwärmen unter vermindertem Druck auf mäßig erhöhte Temperatur ("Andestillieren") von den letzten flüchtigen Anteilen befreien und auf diese Weise reinigen lassen. Sind die Verbindungen der Formel I kristallin, so kann ihre Reinigung durch Umkristallisation erfolgen.

Da die Verbindungen der Formel I meist als Gemische strukturiosomerer syn- und anti-Formen auftreten, eignen sich deren Schmelz- bzw. Siedebereiche wenig zur Identifizierung, es sei denn, man hat die Strukturisomeren zuvor getrennt. Von den jeweils hergestellten Stoffen werden daher in folgendem Ergebnisse der Elementaranalyse und IR-Spektren mit typischen Absorptionsmaxima aus dem sog. "fingerprint"-Bereich zwischen 1 500 $cm^{-1}$ und 900 $cm^{-1}$ angegeben.

Beispiel 1

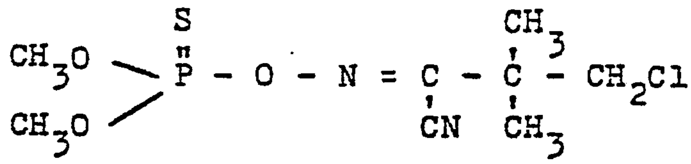

6,01 g 2-Hydroximino-3-methyl-3(chlormethyl)butyronitril und 5,0 g gepulvertes Kaliumcarbonat werden in 40 ml Acetonitril gelöst bzw. suspendiert und unter Rühren tropfenweise mit 6,35 g Thiophosphorsäure-0,0-dimethylesterchlorid versetzt. Die Mischung wird 24 Stunden bei 30°C gerührt, dann wird von unlöslichen Bestandteilen abgesaugt und das Filtrat im Vakuum eingeengt. Der Rückstand wird in Methyl-tert.-butylether aufgenommen, einmal mit 5%iger Sodalösung und zweimal mit Wasser gewaschen und vom Lösungsmittel befreit. Nach dem Andestillieren bei 70°C und 0,01 mbar verbleiben 10,4 g 0-(0,0-Dimethylthiophosphyl)-2-oximino-3-methyl-3-chlormethylbutyronitril als nahezu farbloses Ö; Ausbeute: 98% der rechnerisch möglichen.

$C_8H_{14}ClN_2O_3PS$ (284,5)
ber.: C 33,8 H 5,0 N 9,8
gef.: C 33,9 H 5,1 N 9,6
Infrarotabsorptionen ($cm^{-1}$): 1181, 1103, 1039, 929, 905, 870, 844.

Die in der nachstehenden Tabelle aufgeführten Verbindungen wurden ebenfalls auf dem im Beispiel 1 beschriebenen Weg erhalten, soweit mindestens eine physikalische Angabe zu ihrer Identifizierung vorliegt; andere Verbindungen, die der Formel (I) entsprechen, können auf die gleiche Weise unter entsprechender Abwandlung der Vorschriften nach der jeweils benötigten Menge und (wegen der besten Reaktionsbedingungen) gegebenenfalls nach einem Vorversuch erhalten werden.

Tabelle

| Bsp. Nr. | $R^1$ | $R^2$ | X | Infrarotabsorptionen ($cm^{-1}$) |
|---|---|---|---|---|
| 2 | $C_2H_5$ | $C_2H_5O$ | S | 1102, 1023, 978, 928, 901, 860, 838, 821, 800 |
| 3 | $C_2H_5$ | $CH_3$ | S | 1301, 1102, 1036, 970, 935, 911, 889 |
| 4 | $CH_3$ | $C_2H_5$ | S | 1054, 1026, 1014, 927, 893 |
| 5 | $C_2H_5$ | $C_2H_5$ | S | 1048, 1023, 1013, 927, 895, 849, 834, 809, 798 |
| 6 | $C_2H_5$ | i-$C_3H_7$–NH | O | 1469, 1438, 1258, 1167, 1046, 935, 907 |
| 7 | $C_2H_5$ | n-$C_3H_7$–S | S | 1022, 964, 922, 894, 850, 790 |
| 8 | $C_2H_5$ | sec.-$C_4H_9$–S | O | 1269, 1028, 971, 927, 924, 853, 727 |
| 9 | $CH_3$ | $CH_3O$ | O | |
| 10 | $C_2H_5$ | $C_2H_5O$ | O | 1293, 1166, 1103, 1034, 986, 936, 867 |
| 11 | $C_2H_5$ | $C_6H_5$ | S | 1123, 1034, 1026, 918, 894, 847, 793 |
| 12 | $C_2H_5$ | sec.-$C_4H_9$–S | S | 1022, 963, 923, 894, 788, 730 |
| 13 | $C_2H_5$ | n-$C_3H_7$–S | O | |

Die vorstehend aufgeführten und andere erfindungsgemäße Wirkstoffe werden auf die für Phosphorsäureester übliche Weise angewendet. Angaben zur Formulierung, Anwendungstechnik und Wirkungsweise und Angaben über geeignete Mischungspartner zur Erzielung synergistischer und anderer vorteilhafter Wirkungen können beispielsweise der US-PS 4 320 122 oder den eingangs genannten Druckschriften entnommen werden.

Die biologische Wirkung der erfindungsgemäßen Wirkstoffe wurde mit der der folgenden bekannten Wirkstoffe verglichen:

I

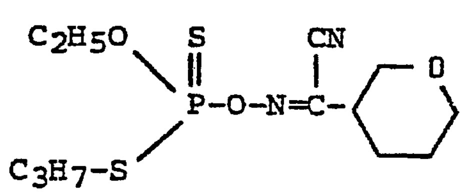

aus DE-OS 2 952 738

II

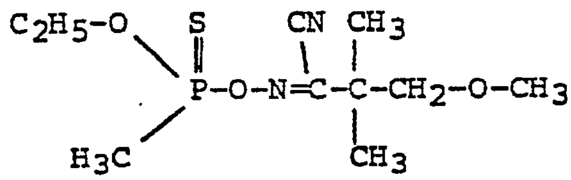

aus DE-OS 3 135 182 und

III

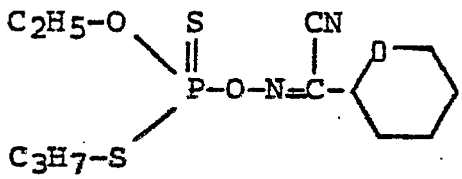

aus DE-OS 3 302 969.

Kontaktwirkung auf Schaben (Blatta orientalis)

Der Boden eines 1 l-Weckglases wird mit der acetonischen Lösung des Wirkstoffes behandelt. Nach Verdunsten des Lösungsmittels setzt man je Glas 5 adulte Schaben.

In diesem Versuch erzielen die Verbindungen 1–5 und 7 bei Anwendungsmengen von unter 0,1 mg dieselbe Wirkung wie die Vergleichsverbindungen I und II bei einer 4- bzw. 2,5-fach höheren Dosierung.

Dauerkontakt auf Stubenfliegen (Musca domestica)

Petrischalen mit 10 cm Durchmesser werden innen mit der azetonischen Lösung der Wirkstoffe behandelt. Nach Verdunsten des Lösungsmittels besetzt man die Schalen mit 20 4Tage alten Stubenfliegen. Die Mortalität wird nach 4 Stunden ermittelt.

Bei diesem Versuch erzielen die Verbindungen 1–5 eine wenigstens doppelt so starke Wirkung wie die stärkstwirkende Verbindung II des Vergleichs.

Kontaktwirkung auf Stubenfliegen (Musca domestica) Applikationstest

4Tage alte Imagines erhalten in leichter $CO_2$-Narkose 1µl der acetonischen Wirkstofflösung auf das ventrale Abdomen appliziert. Hierzu wird eine Mikrometerspritze verwendet.

Je 20 Versuchstiere mit gleicher Behandlung bringt man in einen Cellophanbeutel (ca. 500 ml). Nach 4 Stunden zählt man die Tiere in Rückenlage aus und ermittelt graphisch die LD 50.

Bei diesem Versuch erzielten die Verbindungen 1–5 und 8 eine bis zu 10 mal bessere Wirkung als die Vergleichsverbindungen I oder II.

Kontaktwirkung auf Moskito-Larven (Aedes aegypti)

200 ml Leitungswasser werden mit der Wirkstoffaufbereitung versetzt und darauf mit 30–40 Moskito-Larven im 4. Larvenstadium besetzt. Die Versuchstemperatur beträgt 20°C. Nach 24 Stunden wird die Wirkung ermittelt.

Bei diesem Versuch erzielen die Verbindungen 1, 2 und 8 eine 2,5- bis 10fach bessere Wirkung als die Vergleichsverbindungen I, II oder III.

Kontaktwirkung auf Baumwollwanze (Dysdercus intermedius)

Petrischalen von 10 cm Durchmesser werden mit 1 ml der azetonischen Wirkstofflösung ausgekleidet. Nach Verdunsten des Lösungsmittels besetzt man die Schalen mit je 20 Larven des vorletzten Stadiums und registriert die Wirkung nach 24 Stunden.

Bei diesem Versuch erzielen die Verbindungen 1 bis 6 eine bis zu 10fach bessere Wirkung als die Vergleichsverbindungen I bis III.

Kontaktwirkung auf Blattläuse (Aphis fabae) Spritzversuch

Getopfte Bohnenpflanzen (Vicia faba) mit starken Blattlauskolonien werden in der Spritzkammer mit den wäßrigen Wirkstoffaufbereitungen tropfnaß gespritzt.

Die Auswertung erfolgt nach 24 Stunden.

Bei diesem Versuch erzielen die Verbindungen 1 und 2 eine bis zu 10fach bessere Wirkung als die Vergleichsverbindungen I bis III.

Wirkung auf Raupen von Prodenia litura

Junge Maisblätter werden 3 Sekunden in die wäßrige Aufbereitung der Wirkstoffe getaucht. Nach dem Antrocknen der Beläge bringt man sie in Petrischalen (D. 10 cm) und besetzt diese mit 5 Raupen von ca. 1,5 cm Länge. Die Wirkung wird nach 48 Stunden bestimmt.

Bei diesem Versuch erzielen die Verbindungen 3 bis 5 wenigstens die 2fache Wirkung der Vergleichsverbindung III.

Kontaktwirkung auf Zecken (Ornithodorus moubata)

Die Prüfung erfolgt an jungen Zecken, die erst einmal Blut aufgenommen haben. Je 5 Tiere werden in einen TEEFIX-Beutel 5 Sekunden in die wäßrige Wirkstoffaufbereitung getaucht. Der Beutel wird frei aufgehängt. Nach 48 Stunden ermittelt man die Mortalitätsrate.

Bei diesem Versuch erzielen die Verbindungen 1–6 eine 4- bis 50fache und stärkere Wirkung als die Vergleichsverbindungen I bis III.

Wirkung auf Wurzelgallennematoden (Meloidogyne incognita)

Je 300 g Komposterde werden mit 30 ml der wäßrigen Wirkstoffaufbereitung innig vermischt und in Plastiktöpfe gefüllt. Darauf bepflanzt man die Töpfe mit Tomatensetzlingen und hält diese unter Gewächshausbedingungen bei 22–24°C.

Nach 6–8 Wochen untersucht man die Wurzeln auf Gallenbildung.

Bei diesem Versuch erzielen die Verbindungen 4 und 5 bei 2,5- bis 10fach geringerer Konzentration als der Konzentration der Vergleichsverbindungen I und II volle Wirkung, während die Vergleichsverbindungen sich als wirkungslos erweisen.

Vorprodukte

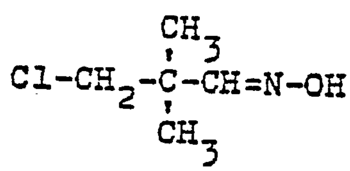

63,5 g gepulvertes Natriumhydroxid werden in einer Mischung aus 155 ml Wasser und 650 ml Ethanol gelöst. Unter Kühlung fügt man 113,5 g Hydroxylaminhydrochlorid in 70 ml Wasser hinzu, saugt vom ausgefallenen Natriumchlorid ab und tropft das Filtrat unter Rühren bei maximal 30°C zu 166,5 g Chlorpivalaldehyd. Die Reaktionsmischung wird 12 Stunden bei Raumtemperatur nachgerührt und in Wasser gegossen. Die wäßrige Phase wird mit Kochsalz gesättigt und fünfmal mit je 150 ml Ether extrahiert. Die vereinigten Extrakte werden über Natriumsulfat getrocknet. Nach dem Abziehen des Lösungsmittels verbleibt ein gelbes Öl, das im Vakuum destilliert wird. Man erhält 120 g 2-Methyl-2(chlormethyl)propionaldoxim als farbloses Öl mit einem Siedebereich von 63–65°C bei einem Druck von 5 mbar.

Ausbeute: 64% der berechneten Menge.

Infrarotabsorptionen ($cm^{-1}$): 1382, 1367, 1296, 988, 946, 889

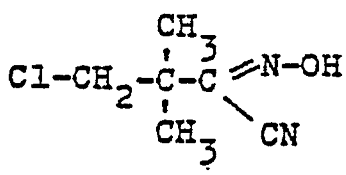

In eine gekühlte Lösung von 120 g 2-Methyl-2(chlormethyl)propionaldoxim in 1,2 l Ether leitet man unterhalb 0°C 69,1 g Chlorgas ein. Anschließend werden die flüchtigen Bestandteile der Reaktionsmischung abgezogen, der Rückstand in 600 ml Ether aufgenommen und 24 Stunden bei Raumtemperatur aufbewahrt. Danach fügt man diese Flüssigkeit tropfenweise zu einer auf 10–15°C gekühlten Suspension von 63,4 g Kaliumcyanid in 670 ml Methanol und läßt 3 Stunden bei Raumtemperatur nachrühren. Das abgeschiedene Kaliumchlorid wird abgesaugt, der Rückstand in Methyl-tert.-butylether gelöst, dreimal mit Wasser gewaschen und über Magnesiumsulfat getrocknet. Nach dem Abziehen des Lösungsmittels verbleiben 117 g 2-Hydroximino-3-methyl-3(chloremethyl)butyronitril als hellgelber Feststoff, welcher zwischen 71°C und 73°C schmilzt.

Ausbeute: 82% der rechnerisch möglichen.

Infrarotabsorptionen ($cm^{-1}$): 1452, 1403, 1391, 1288, 1104, 995, 938.

## Patentansprüche

1. Oximinophosphorsäurederivat der Formel I

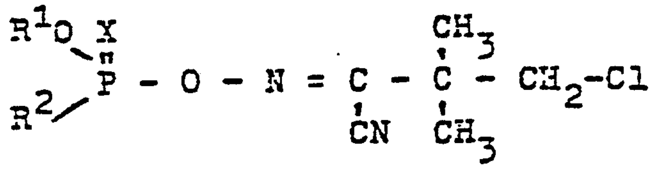
(I),

in der

$R^1$ eine unverzweigte oder verzweigte Alkylgruppe mit bis zu 4 Kohlenstoffatomen,

$R^2$ eine unverzweigte oder verzweigte Alkoxy- oder Alkylthiogruppe mit bis zu 4 Kohlenstoffatomen, eine unverzweigte oder verzweigte Alkylgruppe mit bis zu 3 Kohlenstoffatomen, Phenyl, die Aminogruppe oder einen unverzweigten der verzweigten Alkylamino- oder Dialkylaminorest mit jeweils bis zu 4 Kohlenstoffatomen pro Alkylgruppe,

X Sauerstoff oder Schwefel bedeuten.

2. Verfahren zur Herstellung von Oximinophosphorsäurederivaten der Formel I gemäß Anspruch 1, dadurch gekennzeichnet, daß man das α-Oximinonitril (II)

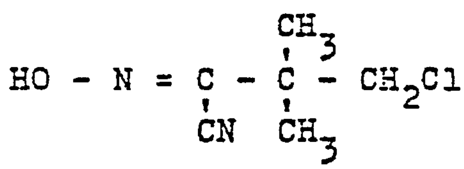
(II),

vorzugsweise in Gegenwart eines Säureacceptors oder Alkalimetall-, Erdalkalimetall- oder gegebenenfalls substituierte Ammoniumsalze dieses α-Oximinonitrils mit einem entsprechenden (Thio)(Thiol)Phosphor(Phosphon)säureester(amid)-halogenid (III)

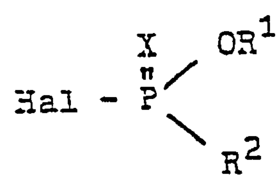
(III),

worin $R^1$, $R^2$ und X die in Anspruch 1 genannte Bedeutung haben und Hal für Halogen steht, gegebenenfalls in Gegenwart eines Lösungs- oder Verdünnungsmittels bei Temperaturen zwischen 0 und 120°C umsetzt.

3. Schädlingsbekämpfungsmittel, enthaltend ein Oximinophosphorsäurederivat gemäß Anspruch 1.

4. Schädlingsbekämpfungsmittel, enthaltend einen festen oder flüssigen Trägerstoff und mindestens ein Oximinophosphorsäurederivat der Formel I gemäß Anspruch 1.

5. Verwendung von Oximinophosphorsäurederivaten der Formel I gemäß Anspruch 1 zur Bekämpfung von Schädlingen.

6. Verfahren zur Bekämpfung von Schädlingen, dadurch gekennzeichnet, daß man eine wirksame Menge des Oximinophosphorsäurederivats gemäß Anspruch 1 auf Schädlinge bzw. deren Lebensraum einwirken läßt.

## Revendications

1. Dérivé d'acide oximinophorsphorique de formule 1

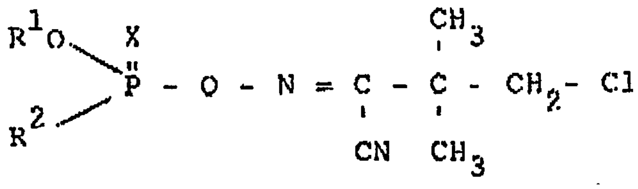 (1),

dans laquelle
$R^1$ représente un groupe alkyle ramifié on non ramifié on non ramifié ayant jusqu'à 4 atomes de carbone
$R^2$ représente un groupe alcoxy- ou alkylthio, ramifié ou non, ayant jusqu'à 4 atomes de carbone, un groupe alkyle, ramifié ou non, ayant jusqu'à 3 atomes de carbone, phenyle, le groupe amino ou un reste alkyle ou dialkylamino ayant chacun jusqu'à 4 atomes de carbone par groupe alkyle,
X représente oxygène ou souire.

2. Procédé de préparation de dérivés d'acide oximinophosphorique de formule 1 selon la revendication 1, caractérisé par le fait que l'on fait réagir des températures comprises entre 0 et 120°C, éventuellement en présence d'un solvant ou diluant, 1-α-oximinonitrile (II)

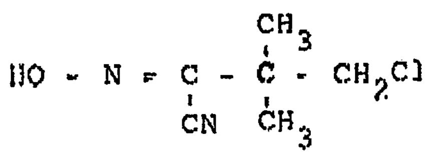 (II)

de préférence en présence d'un accepteur d'acide ou d'un sel de métal alcalin, de métal alcalinoterroux ou d'ammonium éventuellement substitué de ce α-oximinonitrile, avec un halogénure d'ester (amide) d'acide (thio) (thiol) phosphorique (phosphonique) (III)

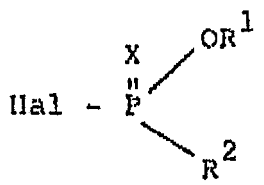 (III)

où $R^1$, $R^2$ et X ont la signification donnée dans la revendication 1 et Hal est mis pour halogène.

3. Posticide contenant un dérivé d'acide oximinophosphorique selon la revendication 1.

4. Pesticide contenant un support solide ou liquide et au moins un dérivé d'acide oximinophosphorique de formule 1 selon la revendication 1.

5. Utilisation des dérivés d'acide oximinophosphirique de formule 1 selon la revendication 1 pour la lutte contre les parasites.

6. Procédé de lutte contre les parasites, caractérisé par le fait que l'on fait agir une quantité officace de dérivé d'acide oximinophosphorique selon la revendication 1 sur des parasites ou leur biotope.

## Claims

1. An oximinophospheric acid derivative of the formula I

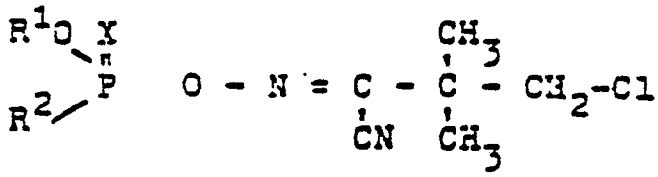 (I)

where $R^1$ is straight-chain or branched alkyl of not more than 4 carbon atoms, $R^2$ is a straight-chain or branched alkoxy or alkylthio group of not more than 4 carbon atoms, straight-chain or branched alkyl of not more than 3 carbon atoms, phenyl, amino or a straight-chain or branched alkylamino or dialkylamino

radical, where alkyl in each case is of not more than 4 carbon atoms, and X is oxygen or sulfur.

2. A process for manufacturing oximinophorsphoric acid derivatives of the formula I as set forth in claim 1, wherein the α-oximinonitrile of the formula (II)

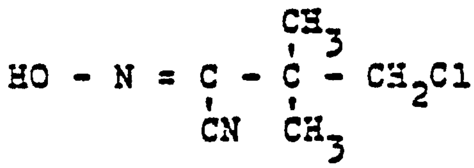

(II),

is reacted preferably in the presence of an acid acceptor, or an alkali metal, alkaline earth metal or substituted or unsubstituted ammonium salt of this α-oximinonitrile with an appropriate (thio)(thiol) phosphoric (phosphonic) ester (amide) halide (III)

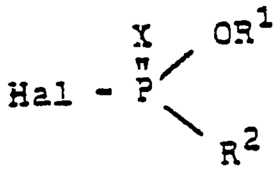

(III),

where $R^1$, $R^2$ and X are as defined in claim 1 and Hal is halogen, in the presence of absence of a solvent or diluent at from 0° to 120°C.

3. A pesticidal agent containing an oximinophosphoric acid derivative a claimed in claim 1.

4. A pesticidal agent containing a solid or liquid carrier and at least one oximinophosphoric acid derivative of the formula I as claimed in claim 1.

5. The use of oximinophosphoric acid derivatives of the formula I as claimed in claim 1 for combating pests.

6. A process for combating pests, wherein an effective amount of an oximinophosphoric acid derivative of the formula I as claimed in claim 1 is allowed to act on pests or their habitat.